# EUROPÄISCHE PATENTSCHRIFT

(11) **EP 3 651 985 B1**
(45) Veröffentlichungstag und Bekanntmachung des Hinweises auf die Patenterteilung: **24.01.2024**
(21) Anmeldenummer: 18733890.0
(22) Anmeldetag: 02.07.2018
(51) Int. Cl.: B32B 3/26, E04B 5/46, B32B 17/10

(54) **BEGEHBARE VERGLASUNG MIT SILIKONMATTE**
WALK-ON GLAZING WITH SILICONE MAT
VITRAGE PRATICABLE COMPRENANT UNE NATTE EN SILICONE

(30) Priorität: 12.07.2017 EP 17180840
(43) Veröffentlichungstag der Anmeldung: 20.05.2020
(73) Patentinhaber: SAINT-GOBAIN GLASS FRANCE, 92400 Courbevoie (FR)
(72) Erfinder: NEANDER, Marcus, 52249 Eschweiler (DE); GILLISSEN, Manfred, 52134 Herzogenrath (DE); KIRCILI, Adem, 52249 Eschweiler (DE); SERRUYS, Francis, 8310 Brugge (BE); HERMENS, Ulrich, 52078 Aachen (DE)
(74) Vertreter: Gebauer, Dieter Edmund
(86) Internationale Anmeldenummer: PCT/EP2018/067812
(87) Internationale Veröffentlichungsnummer: WO 2019/011694

(56) Entgegenhaltungen:
- WO-A1-2016/066423
- US-A1- 2010 093 242

## Beschreibung

Die Erfindung betrifft ein begehbares Glaselement, ein Verfahren zur Herstellung desselben, dessen Verwendung und eine das Glaselement umfassende begehbare Verglasung.

Begehbare Verglasungen finden vielfältige Anwendung im Bau- und Architekturbereich, z.B. als Glasböden im Innen- und Außenbereich oder als begehbare Überkopfverglasung. Damit die Glasoberfläche für diese Anwendungen rutschsicher ist, ist es häufig zweckmäßig, sie mit einer rutschhemmenden Oberfläche auszustatten.

Begehbare Glaselemente sind Glaselemente für begehbare Verglasungen. Diese sind aus mehreren Scheiben aufgebaut, wobei die oberste Glasscheibe oder Deckscheibe als Schutzscheibe oder Opferscheibe dient und die Gläser, die sich drunter befinden, die Tragfunktion erfüllen. Um höhere Belastungen aufnehmen zu können und um entsprechende Sicherheiten zu erreichen, bestehen derartige Glaselemente aus mindestens drei Scheiben, die über Polymerschichten fest miteinander verbunden sind.

Da die Belastungen bei Nutzung unmittelbar auf die Deckscheibe einwirken, sind Abnutzungserscheinungen gewöhnlich auf die Deckscheibe beschränkt. insbesondere wenn die Deckscheibe mit einer rutschhemmenden Oberfläche versehen ist, wird diese nach einer bestimmten Nutzungsdauer abgenutzt und die Rutschhemmung lässt erheblich nach. Mögliche Beschädigungen der Verglasung beim Gebrauch, z.B. ein Bruch, treffen ebenfalls oft nur die Deckscheibe. Die Deckscheibe wird daher auch als Verschleißschicht bezeichnet. Es kann daher erforderlich werden, das abgenutzte oder beschädigte Glaselement gegen ein neues Glaselement auszutauschen.

Der Austausch des abgenutzten oder beschädigten Glaselements ist sehr aufwendig und teuer, da das gesamte Glaselement ausgetauscht werden muss. Die unter der Deckscheibe existierenden Verglasungen sind aber nach Abnutzung oder Beschädigung in der Regel noch voll funktionsfähig. Sie können aber nur mit sehr großem Aufwand von der abgenutzten oder beschädigten Deckscheibe getrennt werden. Dieser Aufwand steht in keinem Verhältnis zu einer neuen Verglasung, die aber bereits als Neuprodukt sehr hohen Herstellkosten unterliegt. In der WO 2016/066423 A1 ist ein begehbares Glaselement mit einer Verbundsicherheitsglasscheibe und einem Deckglas mit rutschhemmender Oberfläche offenbart. Das Glaselement ist über ein Vakuum versiegelt, sodass das Deckglas nach Entfernen des Vakuums abgelöst werden kann. Der Aufbau ist jedoch sehr aufwändig und teuer in der Herstellung und Instandhaltung.

In der US 2010/093242 A1 wird ein feuerbeständiges Glaselement offenbart, das für tragende Anwendungen geeignet ist. Das Glaselement umfasst eine Verbundglasscheibe aus mindestens zwei Glasscheiben, die durch mindestens eine zwischen den Glasscheiben angeordnete Polymerschicht miteinander verbunden sind, eine Deckscheibe und eine Silikonmatte als Zwischenschicht, die zwischen der Verbundglasscheibe und der Deckscheibe angeordnet ist. J

Der Erfindung liegt die Aufgabe zu Grunde, ein für die begehbare Verglasung geeignetes Glaselement bereitzustellen, bei der nach Abnutzung oder Beschädigung der Deckscheibe nicht die gesamte Verglasung ersetzt werden muss. Der Erfindung liegt die weitere Aufgabe zu Grunde, ein wirtschaftliches und umweltschonendes Verfahren bereitzustellen, bei dem die abgenutzte oder beschädigte Deckscheibe durch eine neue Deckscheibe ausgetauscht wird ohne dabei das gesamte Glaselement auszutauschen. Insbesondere soll der Austausch der Deckscheibe vor Ort im eingebauten Zustand der Verglasung erfolgen.

Die Aufgabe der Erfindung wird erfindungsgemäß durch ein begehbares Glaselement gemäß Patentanspruch 1 gelöst. Die Erfindung betrifft auch Verfahren zur Herstellung des erfindungsgemäßen Glaselements, dessen Verwendung und eine das Glaselement umfassende begehbare Verglasung gemäß den weiteren unabhängigen Patentansprüchen. Vorteilhafte Ausgestaltungen der Erfindung gehen aus den abhängigen Patentansprüchen hervor.

Die Erfindung betrifft somit ein begehbares Glaselement, umfassend
eine Verbundglasscheibe 5 umfassend mindestens zwei Glasscheiben 2, die mit mindestens einer zwischen den Glasscheiben befindlichen Polymerschicht 3 aus Polyvinylbutyral (PVB), Ethylenvinylacetat (EVA), Polyurethan und/oder Gemischen davon miteinander verbunden sind,
eine Deckscheibe 1 und
eine Zwischenlage 4, die zwischen der Verbundglasscheibe 5 und der Deckscheibe 1 angeordnet ist,
wobei die Zwischenlage 4 eine Silikonmatte oder eine Acrylmatte ist.

Mit der Erfindung wird bei der Verwendung des Glaselements z.B. als Fußbodenverglasung eine Vereinfachung der Austauschbarkeit und eine Kostenreduktion für den Kunden erreicht, da im Fall eines Defekts oder einer Abnutzung nur die obere Deckscheibe und nicht das gesamte Glaselement ausgetauscht werden muss. Gerade bei den stetig steigenden Anforderungen an die Verglasung, wie z.B. die Kombination von Brandschutz und/oder Einbruchschutz kann die Erfindung erhebliche Einsparungen bringen. In besonderen Fällen, in denen es sich z. B. um begehbare Dach- oder Überkopfverglasung handelt, entfällt zudem die Zeit für die Absperrung von darunterliegenden Bereichen. Des Weiteren wird durch die hohe Transparenz des verwendeten Silikons oder Acryls ein einheitliches optisches Bild gewährleistet. Darüber hinaus besteht die Möglichkeit der individuellen Farbgebung durch Verwendung von farbigem Silikon oder Acryl bzw. farbigen Silikonmatten oder Acrylmatten.

Es ergeben sich insbesondere folgende Vorteile:
- Kein kompletter Austausch von Glaselementen erforderlich
- Leichter Austausch von Deckscheiben, z.B. in einem Glasfußboden, im eingebauten Zustand
- Schnelles Verlegen
- Gute Materialkompatibilität mit üblichen Versiegelungsmaterialien
- Keine Lamination erforderlich
- Ausgleich von möglichen Welligkeiten zwischen Deckscheibe (z.B. Einscheibensichterheitsglas (ESG)) und Verbundglas (z.B. Teilvorgespanntes Glas (TVG))
- Vermeidung von Irisationsbildern
- Optisch einheitliches Erscheinungsbild verglichen mit beschichteten PET-Folien, keine Farbreflektionen
- Trittschalldämmung
- Schutz des unteren Scheibenaufbaus vor Splittern bei Glasbruch der oberen Scheibe - Bindung von Splittern und Bruchstücken an die Silikonmatte bzw. Acrylmatte - Vermeidung, dass Glasstücke im Zerstörungsfall verteilt werden.
- Ggf. Farbgebung durch Verwendung von eingefärbtem Silikon oder Acry bzw. eingefärbten Silikon- oder Acrylmatten möglich

Im Folgenden wird die Erfindung ausführlich erläutert.

Das erfindungsgemäße Glaselement ist aus mindestens drei Scheiben aufgebaut, wobei die oberste Deckscheibe als Schutzscheibe dient und die Glasscheiben, die sich drunter befinden und gewöhnlich eine Verbundglasscheibe bilden, die Tragfunktion erfüllen. Das begehbare Glaselement bzw. die damit hergestellten Verglasungen können als begehbares Glaselement bzw. Verglasung verwendet werden. Als begehbares Glas bzw. begehbare Verglasung gelten Konstruktionen, die planmäßig durch Personenverkehr belastet werden können.

In der vorliegenden Anmeldung wird die Lage der Deckscheibe relativ zur Verbundglasscheibe als "oben" bezeichnet und die Lage der Verbundglasscheibe als "unten". Die entspricht der Positionierung des Glaselements beim Einbau, z.B. in einen Glasboden, relativ zum Boden.

Das erfindungsgemäße begehbare Glaselement umfasst eine Verbundglasscheibe, umfassend mindestens zwei Glasscheiben, die mit mindestens einer zwischen den Glasscheiben befindlichen Polymerschicht miteinander verbunden sind. Die Verbundglasscheibe ist bevorzugt eine Verbundsicherheitsglasscheibe (VSG-Scheibe).

Die beiden Glasscheiben der Verbundglasscheibe können aus dem gleichen Material oder aus verschiedenem Material sein. Die Scheiben können aus anorganischem Glas und/oder organischem Glas (Polymere) sein. Die beiden Glasscheiben sind unabhängig voneinander bevorzugt ausgewählt aus Flachglas (z.B. Floatglas), Quarzglas, Borosilikatglas, Kalk-Natron-Glas, Alkalialuminosilikatglas, Polycarbonat und/oder Polymethacrylat. Die Glasscheiben der Verbundglasscheibe sind bevorzugt aus Floatglas oder aus teilvorgespanntem Glas (TVG).

Die beiden Glasscheiben der Verbundglasscheibe können die gleiche Dicke oder unterschiedliche Dicken aufweisen. Bevorzugt weisen die einzelnen Glasscheiben unabhängig voneinander eine Dicke im Bereich von 6 mm bis 30 mm, bevorzugt 8 mm bis 25 mm, auf. Diese Dicken der Scheiben sind vorteilhaft im Hinblick auf Stabilität einerseits und Gewicht andererseits.

Zwischen den mindestens zwei Glasscheiben der Verbundglasscheiben befindet sich mindestens eine Polymerschicht, die die Glasscheiben zu einem Glasverbund bzw. Glaslaminat miteinander verbinden. Dadurch kann bei Glasbruch der Verglasung das Abfallen von Bruchstücken sowie der Durchbruch von Personen oder Gegenständen verhindert werden. Es können eine oder mehrere Polymerschichten vorhanden sein.

Für die Bildung der mindestens eine Polymerschicht wird im allgemeinen eine Polymerfolie verwendet, die zur Laminierung der mindestens zwei Glasscheiben dient. Vorzugsweise enthält die mindestens eine Polymerschicht ein thermoplastisches Polymer. Die eine oder mehrere Polymerschichten sind bevorzugt transparent.

Die mindestens eine Polymerschicht ist aus Polyvinylbutyral (PVB), Ethylenvinylacetat (EVA), Polyurethan, und/oder Gemische davon, wobei PVB bevorzugt ist.

Die eine oder mehreren Polymerschichten weisen z.B. zusammengenommen eine Gesamtdicke von 0,38 mm bis 2,28 mm, bevorzugter von 0,5 mm bis 2 mm auf, typische Dicken sind 0,76 mm, 1,14mm oder 1,52 mm.

Neben der oder den Polymerschichten zur Laminierung können ferner gegebenenfalls eine oder mehrere Polymerschichten mit einer anderen Funktion enthalten sein, z.B. eine Polyesterschicht. Eine solche Polyesterschicht kann z.B. mit einer infrarotreflektierenden Beschichtung versehen sein.

Die Verbundglasscheibe kann auch mehr als zwei Glasscheiben aufweisen, z.B. drei oder vier, wobei sich entsprechend jeweils zwischen zwei Glasscheiben mindestens eine Polymerschicht befindet, um die Glasscheiben miteinander zu verbinden. Für die zusätzlichen Glasscheiben und Polymerschichten gelten bezüglich des Materials und der Dicke die vorstehenden Angaben zu den Glasscheiben und Polymerschichten entsprechend.

Das erfindungsgemäße Glaselement umfasst ferner eine Deckscheibe, die die oberste Glasscheibe des Glaselements darstellt und als Schutzscheibe dient. Bei der Deckscheibe handelt es sich ebenfalls um eine Glasscheibe oder sie umfasst eine Glasscheibe. Die Deckscheibe kann eine monolithische Glasscheibe sein, die dann bevorzugt vorgespannt ist, es ist aber gegebenenfalls möglich, eine Verbundglasscheibe aus zwei oder mehr Glasscheiben zu verwenden.

Die Deckscheibe bzw. die Glasscheibe der Deckscheibe kann aus anorganischem Glas und/oder organischem Glas (Polymere) sein, bevorzugt ausgewählt aus Flachglas (z.B. Floatglas), Quarzglas, Borosilikatglas, Kalk-Natron-Glas, Alkalialuminosilikatglas, Polycarbonat und/oder Polymethacrylat.

Die Deckscheibe ist bevorzugt aus thermisch vorgespanntem, thermisch teilvorgespanntem oder chemisch vorgespanntem Glas. Chemisch vorgespanntes Glas ist ein Glas, das durch chemische Verfahren, z.B. lonenaustauschvorgänge, vorgespannt wurde. Die Deckscheibe ist besonders bevorzugt Einscheibensicherheitsglas (ESG) oder chemisch vorgespanntes Glas.

Die Deckscheibe weist z.B. eine Dicke im Bereich von 3 mm bis 15 mm, bevorzugt 4 mm bis 12 mm auf. Wenn die Deckscheibe Einscheibensicherheitsglas ist, beträgt die Dicke bevorzugt mindestens 6 mm, z.B. 6 mm bis 15 mm, bevorzugter 6 mm bis 12 mm. Wenn die Deckscheibe chemisch vorgespanntes Glas ist, kann die Deckscheibe z.B. eine Dicke von 6 mm bis 15 mm, bevorzugt 6 mm bis 12 mm, aufweisen.

In einer bevorzugten Ausführungsform weist die Deckscheibe eine rutschhemmende Oberfläche auf. Es versteht sich, dass die rutschhemmende Oberfläche auf der Oberseite der Deckscheibe angebracht ist. Durch die rutschhemmende Oberfläche kann die Rutsch- und Unfallgefahr deutlich verringert werden, weswegen sie aufgrund von Unfallverhütungsvorschriften im öffentlichen Raum häufig erforderlich ist.

Die rutschhemmende Oberfläche kann z.B. durch Aufrauen bzw. Strukturieren der Oberfläche der Deckscheibe selbst oder durch Aufbringen einer rutschhemmenden Beschichtung oder eines rutschhemmenden Aufdrucks auf die Deckscheibe erhalten werden. Die rutschhemmende Oberfläche kann z.B. durch Aufrauen mit Sandstrahl, durch Ätzen mit Säure, durch Siebdruck, insbesondere mit rutschhemmender Emaille, durch Laserstrukturierung oder durch Aufbringen einer rutschhemmenden Beschichtung bzw. eines rutschhemmenden Aufdrucks gebildet werden. Die Maßnahmen zur Bereitstellung von rutschhemmenden Oberflächen sind dem Fachmann bekannt.

Die Deckscheibe kann vollflächig oder teilflächig mit der rutschhemmenden Oberfläche versehen sein, wobei die rutschhemmende Oberfläche ein regelmäßiges oder unregelmäßiges Muster bilden kann. Die rutschhemmende Oberfläche kann farblos oder farbig transluzent oder opak gebildet sein. Farbigkeit kann z.B. durch gefärbte rutschhemmende Oberflächenbeschichtungen erreicht werden.

Das erfindungsgemäße Glaselement umfasst ferner eine Silikonmatte oder eine Acrylmatte als Zwischenlage, die zwischen der Verbundglasscheibe und der Deckscheibe angeordnet ist. Es ist bevorzugt, dass als Zwischenlage eine Silikonmatte verwendet wird.

Die Zwischenlage ist bevorzugt transparent. Bevorzugt enthält die Zwischenlage keine verstärkenden Fasern oder Füllstoffe. Fasern oder Füllstoffe verschlechtern die Transparenz der Zwischenlage. Da die Zwischenlage zur Verbindung der Deckscheibe und der Verbundglasscheibe dient, sind Fasern oder Füllstoffe nicht notwendig. Transparent bedeutet, dass man durch die Zwischenlage hindurch sehen kann und einen Gegenstand durch die Zwischenlage hindurch betrachten kann.

Die Silikonmatte weist z.B. eine Dicke im Bereich von 0,15 mm bis 5 mm, bevorzugt von 0,5 mm bis 3 mm, besonders bevorzugt von 1 mm bis 2 mm, auf. Die Silikonmatte ist bevorzugt aus einem Silikonmaterial mit einer Shore A-Härte im Bereich von 30 bis 70, bevorzugter von 40 bis 60. In diesem Härten-Bereich ist die Silikonmatte so weich und elastisch, dass sie eine eventuell vorhandene Welligkeit des Deckglases ausgleichen kann. Die Silikonmatte ist auch nicht zu hart, was zu vermehrten Brüchen in der Zwischenlage führen würde und die Splitterbindende Wirkung bei einem Bruch des Deckglases verschlechtern würde.

Die Shore A-Härte kann gemäß JIS K 6249 (veröffentlicht 2003-05-20) bestimmt werden. Die Silikonmatte ist bevorzugt transparent.

Die Acrylmatte weist z.B. eine Dicke im Bereich von 0,15 mm bis 5 mm, bevorzugt von 0,5 mm bis 3 mm, besonders bevorzugt von 1 mm bis 2 mm, auf. Die Acrylmatte ist bevorzugt aus einem Acrylmaterial mit einer Shore A-Härte im Bereich von 30 bis 70, bevorzugter von 40 bis 60. In diesem Bereich ist die Acrylmatte so weich und elastisch, dass sie eine eventuell vorhandene Welligkeit des Deckglases ausgleichen kann. Die Acrylmatte ist auch nicht zu hart, was zu vermehrten Brüchen in der Zwischenlage führen würde und die Splitterbindende Wirkung bei einem Bruch des Deckglases verschlechtern würde. Die Shore A-Härte der Acrylmatte kann ebenfalls gemäß JIS K 6249 (veröffentlicht 2003-05-20) bestimmt werden. Die Norm bezieht sich auf die Bestimmung für Silikone, eignet sich aber auch für die Bestimmung an Acrylmaterial. Die Acrylmatte ist bevorzugt transparent.

Durch die Verwendung der Silikonmatte oder der Acrylmatte wird sichergestellt, dass die Deckscheibe vollflächig aufliegt. So ermöglicht die Silikonmatte bzw. die Acrylmatte durch deren elastische Eigenschaften einen Ausgleich von möglichen Welligkeiten zwischen Deckscheibe und Verbundglasscheibe. Obwohl die Haftung zwischen Deckscheibe und Silikonmatte bzw. Acrylmatte und/oder zwischen Silikonmatte bzw. Acrylmatte und Verbundglasscheibe so ist, dass die Deckscheibe auch nach längerem Einbau problemlos von der Verbundglasscheibe gelöst werden kann, d.h. keine Haftung oder nur eine geringe Haftung vorliegt, kommt es zu keiner Verschiebung der oberen Deckscheibe.

Die Silikonmatte oder die alternativ eingesetzte Acrylmatte bewirken auch eine Trittschalldämmung und weisen optische Eigenschaften auf, die mit denen von Glas gut kompatibel sind bzw. daran angepasst werden kann, so dass ein optisch einheitliches Erscheinungsbild erhalten wird und Irisationsbilder vermieden werden.

Die Silikonmatte ist aus einem Silikonmaterial. Bei dem Silikon des Silikonmaterials kann es sich um die üblicherweise eingesetzten Silikone handeln. Bei den Silikonen handelt es sich bekanntlich um Polyorganosiloxane. Beispiele für die darin enthaltenen organischen Gruppen sind Methyl, Phenyl, Vinyl und Fluoralkyl, insbesondere Methyl.

Das Silikon wird bevorzugt durch Härten von flüssigem Silikon, insbesondere zweikomponentigem flüssigem Silikon, erhalten. Das Silikon ist bevorzugt ein Silikonelastomer, bei dem es sich allgemein um dreidimensional vernetzte Polyorganosiloxane, insbesondere Polydiorganosiloxane, handelt. Die zum Elastomer vernetzbaren Silikonmassen, auch als Silikonkautschuk bezeichnet, können in der Regel neben dem unvernetzten Polyorganosiloxan weitere Bestandteile enthalten. Beispiele für solche Bestandteile sind Füllstoffe, der Vernetzung dienende Zusätze, z.B. Vernetzer, Katalysatoren oder Inhibitoren, und weitere Additive, wie z.B. Weichmacher, Farbpigmente oder Stabilisatoren. Das im Silikonkautschuk enthaltene unvernetzte Polyorganosiloxan weist reaktive Gruppen auf, die untereinander und/oder mit funktionellen Gruppen eines Vernetzers reagieren können, wodurch die dreidimensional vernetzte Struktur erhalten wird. Die Vernetzung wird hier auch als Härten bezeichnet.

Je nach Art der Vernetzung bzw. Härtung lassen sich die Silikonkautschuke in HTV-Silikonkautschuke (heißhärtend) und RTV-Silikonkautschuke (kalthärtend) unterteilen. RTV-Silikonkautschuke können bei Umgebungstemperatur (z.B. 20°C) aushärten, die Härtungsdauer kann bei Bedarf durch Temperaturerhöhung beschleunigt werden. Ferner kann zwischen einkomponentigen (1K)-Silikonkautschuken und zweikomponentigen (2K)-Silikonkautschuken, die als zwei gesonderte Komponenten vertrieben und gelagert werden und erst beim Gebrauch miteinander vermischt werden, unterschieden werden.

Das Silikonelastomer wird bevorzugt aus einem RTV-Silikonkautschuk gebildet. Es ist ferner bevorzugt, dass das Silikonelastomer aus einem zweikomponentigen Silikonkautschuk, insbesondere einem zweikomponentigen RTV-Silikonkautschuk, gebildet wird. Nach Mischen der beiden Komponenten des 2K-Silkonkautschuks wird gewöhnlich eine fließfähige oder pumpfähige Flüssigkeit oder Masse erhalten, die im Verlauf der Zeit aushärtet. Die Härtungsdauer variiert naturgemäß in Abhängigkeit vom eingesetzten System und den eingesetzten Bedingungen, kann aber z.B. bei 20°C mehrere Stunden (z.B. 6 Stunden) bis mehrere Tage (z.B. bis 5 Tage oder mehr) betragen. Der Silikonkautschuk kann zur separaten Herstellung der Silikonmatte oder für deren Bildung während der Herstellung des Glaselements verwendet werden. Diese Verfahrensvarianten werden später näher erläutert.

Bekanntermaßen ist die Haftung von Silikon oder Silikonelastomeren aufgrund ihres inerten Charakters auf Substraten wie Glas gering. Wird z.B. ein Silikonkautschuk auf ein Glassubstrat aufgebracht und dann vernetzt, kann das entstandene Silikonelastomer in der Regel problemlos, also durch Anwendung geringer Zugkräfte, von der Substratoberfläche abgezogen werden. Häufig wird sogar eine spontane Ablösung des Silikonelastomers vom Substrat festgestellt. D.h., es besteht keine oder nur eine geringe Haftung zum Substrat.

Da aber bei vielen Anwendungen eine feste und dauerhafte Substrathaftung des Silikons wichtig ist, wurde eine Vielzahl von Maßnahmen vorgeschlagen, um eine bessere Verbindung zwischen Substrat und Silikonelastomer zu erzielen. Diese Maßnahmen beinhalten die Vorbehandlung der Substratoberfläche mit haftvermittelnden Additiven, sogenannten Primern, oder die Modifizierung des Silkonkautschuks, z.B. durch Zugabe von haftvermittelnden Additiven zum Silikonkautschuk, wodurch sogenannte selbsthaftende Silikone bzw. Silikonkautschuke erhalten werden.

Bei der vorliegenden Erfindung ist es aber gerade vorteilhaft, dass das Silikonausgangsmaterial keine oder nur geringe Hafteigenschaften aufweist. Daher wird bei den nachstehend beschriebenen Herstellungsvarianten des Glaselements, bei der die Silikonmatte durch Einbringen eines flüssigen Silicons, insbesondere eines flüssigen Silikonkautschuks, und Aushärten zwischen Deckscheibe und Verbundglasscheibe gebildet wird, bevorzugt ein normaler, nicht modifiziertes Silikon, d.h. ein nicht selbsthaftendes Silikon, insbesondere ein nicht selbsthaftender Silikonkautschuk, eingesetzt. Bei einer anderen Variante, bei der eine vorfabrizierte Silikonmatte für die Herstellung des Glaselements eingesetzt wird, kann praktisch keine Haftung zwischen Silikon und Glas ausgebildet werden, selbst wenn dazwischen ein Primer aufgebracht würde, da die Silikonmatte in fester Form eingesetzt wird. Die vorfabrizierte Silikonmatte ist dann zwischen einer Glasscheibe der Verbundglasscheibe und der Deckscheibe eingelegt. Bevorzugt wird aber auch in diesem Fall die Silikonmatte durch Aushärten eines nicht selbsthaftenden Silikons, insbesondere eines nicht selbsthaftenden Silikonkautschuks gebildet.

Die Silikonmatte wird bevorzugt durch Härten eines flüssigen nicht selbsthaftenden Silikons, insbesondere eines flüssigen nicht selbsthaftenden Silikonkautschuks, erhalten. Nicht selbsthaftendes Silikon bezieht sich dabei insbesondere auf eine geringe oder keine Haftung auf Glas.

In einer alternativen Ausführungsform wird eine Acrylmatte verwendet. Die Acrylmatte ist aus einem Acrylmaterial. Bei dem Acryl des Acrylmaterials kann es sich um die üblicherweise eingesetzten Acrylpolymere handeln. Bei den Acrylpolymeren handelt es sich bekanntlich um Polymere oder Copolymere von Acrylsäure, Methacrylsäure und/oder deren Estern. Andere Monomere können in den Copolymeren eingebaut sein, z.B. um reaktive Gruppen einzuführen.

Das Acrylmaterial wird bevorzugt durch Härten von flüssigem Acrylharz, insbesondere flüssigem Acrylgießharz, erhalten. Das härtbare flüssige Acrylharz, insbesondere flüssige Acrylgießharz, kann in der Regel neben Acrylharz weitere Bestandteile enthalten. Beispiele für solche Bestandteile sind Füllstoffe, der Vernetzung dienende Zusätze, z.B. Vernetzer, Katalysatoren oder Inhibitoren, und weitere Additive, wie z.B. Weichmacher, Farbpigmente oder Stabilisatoren. Die Härtung der Acrylharze bzw. Acrylgießharze kann über in dem Harz enthaltene reaktive Gruppen, wie z.B. Hydroxymethylgruppen, und/oder zugesetzten Vernetzern bzw. Härtern auf übliche Weise erfolgen. Die Vernetzung wird hier auch als Härten bezeichnet.

Es können thermisch härtende oder UV-härtende Acrylharze bzw. Acrylgießharze verwendet werden. Bei den thermisch härtenden Acrylharzen bzw.

Acrylgießharzen werden bevorzugt solche eingesetzt, die auch bei Umgebungstemperatur (z.B. 20°C) aushärten können. Gegebenenfalls führt die Härtung bei Umgebungstemperatur zu einer Verlängerung der Härtungsdauer. Diese kann bei Bedarf durch Temperaturerhöhung beschleunigt werden.

Das flüssige Acrylharz bzw. Acrylgießharz kann einkomponentig oder zweikomponentig sein. Ein UV-härtendes Acrylharz bzw. Acrylgießharz wird in der Regel als einkomponentiges Harz vertrieben. Bei einem zweikomponentigen Acrylharz bzw. Acrylgießharz ist in der Regel das Acrylharz in einer Komponente und ein Härter in der zweiten Komponente. Die beiden Komponenten werden dann beim Gebrauch miteinander vermischt. Nach Mischen der beiden Komponenten wird gewöhnlich eine fließfähige oder pumpfähige Flüssigkeit oder Masse erhalten, die im Verlauf der Zeit aushärtet. Die Härtungsdauer variiert naturgemäß in Abhängigkeit vom eingesetzten System und den eingesetzten Bedingungen. Das Acrylharz kann zur separaten Herstellung der Acrylmatte oder für deren Bildung während der Herstellung des Glaselements verwendet werden.

Wie vorstehend für Silikon erläutert, können die Haftungseigenschaften auch bei Acrylharzen nach Bedarf eingestellt werden. Daher wird bei den nachstehend beschriebenen Herstellungsvarianten des Glaselements, bei der die Acrylmatte durch Einbringen eines flüssigen Acrylharzes, insbesondere eines flüssigen Acrylgießharzes, und Aushärten zwischen Deckscheibe und Verbundglasscheibe gebildet wird, bevorzugt ein nicht selbsthaftendes Acrylharz, insbesondere ein nicht selbsthaftendes Acrylgießharz, eingesetzt, bei dem keine oder nur eine geringe Haftung zu Glas ausgebildet wird. Bei einer anderen Variante, bei der eine vorfabrizierte Acrylmatte für die Herstellung des Glaselements eingesetzt wird, kann praktisch keine Haftung zwischen Acryl und Glas ausgebildet werden, da die Acrylmatte in fester Form eingesetzt wird. Die vorfabrizierte Acrylmatte ist dann zwischen einer Glasscheibe der Verbundglasscheibe und der Deckscheibe eingelegt. Bevorzugt wird aber auch in diesem Fall die Acrylmatte durch Aushärten eines nicht selbsthaftenden Acrylharzes, insbesondere eines nicht selbsthaftenden Acrylgießharzes gebildet.

Das Glaselement ist insbesondere so ausgebildet, dass an der Grenzfläche zwischen der Deckscheibe und der Silikonmatte bzw. Acrylmatte und/oder an der Grenzfläche zwischen der Silikonmatte bzw. Acrylmatter und der Verbundglasscheibe keine Haftung oder nur eine geringe Haftung vorhanden ist, so dass ein Ablösen der Deckscheibe problemlos möglich ist, also durch Anwendung geringer Zugkräfte. Zwischen Deckscheibe und Silikonmatte bzw. Acrylmatte soll die Haftung idealerweise groß sein, damit Splitter und Bruchstücke im Zerstörungsfall daran haften bleiben und/oder während des Austauschs der Deckscheibe alle Glasbestandteile durch Anheben der Matte in einem entfernt werden können. Die Haftung zwischen der Silikonmatte bzw. der Acrylmatte und der Verbundglasscheibe hingegen sollte gering oder nicht vorhanden sein, um ein leichtes Ablösen der Silikonmatte bzw. der Acrylmatte zu ermöglichen, also durch Anwendung geringer Zugkräfte. Trotzdem ist das Glaselement stabil, eine Verschiebung der oberen Deckscheibe im eingebauten Zustand erfolgt nicht. Maßnahmen zur Stabilisierung sind nicht erforderlich und auch nicht zweckmäßig, so ist z.B. bevorzugt, kein Vakuum an die Silikonmatte bzw. die Acrylmatte anzulegen. Es ist möglich, dass an beiden genannten Grenzflächen keine oder nur eine geringe Haftung vorhanden ist oder nur an einer davon. Letzteres kann z.B. zweckmäßig sein, wenn man die Silikonmatte oder die Acrylmatte zusammen mit der Deckscheibe entfernen möchte. Hierfür sind aber zusätzliche Maßnahmen erforderlich.

Es ist bevorzugt, dass sich zwischen der Deckscheibe und der Zwischenlage und/oder zwischen der Zwischenlage und der Verbundglasscheibe keine Primerschicht befindet. Es kann aber zweckmäßig sein, dass sich entweder zwischen der Deckscheibe und der Zwischenlage (Silikonmatte oder Acrylmatte) oder zwischen der Zwischenlage (Silikonmatte oder Acrylmatte) und der Verbundglasscheibe eine Primerschicht befindet. In einer bevorzugten Ausführungsform befindet sich zwischen der Zwischenlage (Silikonmatte oder Acrylmatte) und der Deckscheibe eine Primerschicht. Eine durch die Primerschicht erzeugte Haftung zwischen Silikonmatte bzw. Acrylmatte und Deckscheibe kann vorteilhaft sein, da beim Ablösen der Deckscheibe gleichzeitig die daran anhaftende Silikonmatte bzw. Acrylmatte von dem darunterliegenden Verbundglas entfernt wird. Zusätzliche Maßnahmen zur Entfernung der Silikonmatte bzw. der Acrylmatte sind dann in der Regel nicht mehr erforderlich.

Ein Primer ist ein Haftvermittler, der die Haftung zwischen Substraten verbessern kann. Geeignete Haftvermittler für Glassubstrate sind dem Fachmann bekannt. Als Haftvermittler eignen sich z.B. Silane oder andere metallorganische Verbindungen, wie z.B. Titanate oder Zirkonate. Der Primer wird im Allgemeinen in einem Lösungsmittel gelöst oder dispergiert auf die Substratoberfläche aufgetragen.

Das Glaselement kann in einem Trägerrahmen angeordnet sein, wobei eine zwischen dem Glaselement und dem Trägerrahmen gebildete Fuge mit einem Dichtstoff versiegelt ist. Bei der durch den Dichtstoff gebildeten seitlichen Versiegelung handelt es sich bevorzugt um eine elastische Polymerdichtung. Beispiele für geeignete elastische Dichtstoffe sind Silikonkautschuk, Polyurethane, Butylkautschuk und/oder Polyacrylate. Bevorzugt ist eine elastische Silikonversiegelung. Beim Einbau wird das Glaselement bevorzugt in einem Trägerrahmen positioniert.

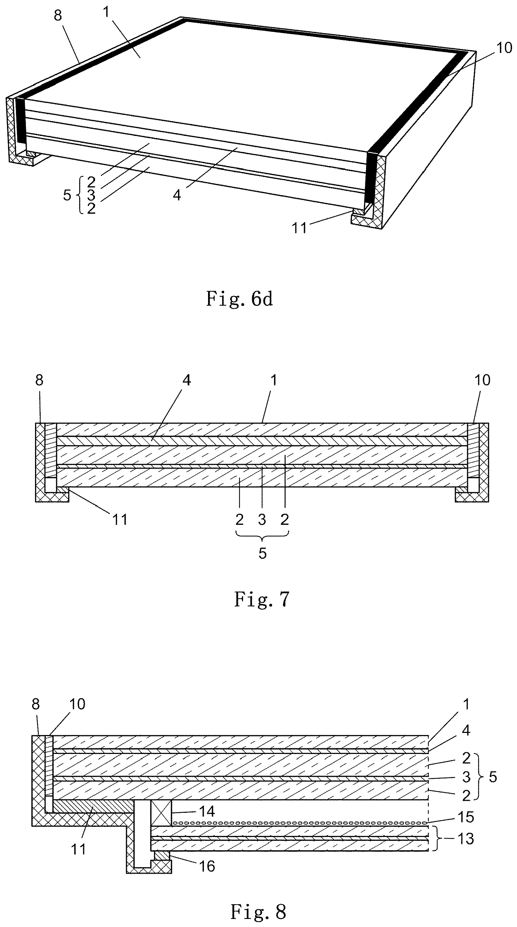

Das Glaselement kann weitere Bestandteile umfassen, z.B. eine Isolierglaseinheit und/oder ein Brandschutzglas. Als Isolierglaseinheit (IGU) kann eine zusätzliche Glasscheibe oder Verbundglasscheibe in das Glaselement unterhalb der Verbundglasscheibe angeordnet sein, wobei die Isolierglaseinheit und die Verbundglasscheibe durch einen mit Gas, z.B. Luft, befüllten Zwischenraum getrennt sind. Ein solches Glaselement ist z.B. in Fig. 8 gezeigt.

Die Deckscheibe und die Verbundglasscheibe mit der dazwischenliegenden Silikonmatte oder Acrylmatte bilden in dem erfindungsgemäßen Glaselement miteinander kein Laminat, also keinen festen Verbund.

Die Glaselemente sind in der Regel in rechteckiger Form, aber auch andere Formen sind denkbar, z.B. kreisförmig oder oval.

Die Erfindung betrifft ferner ein Verfahren zur Herstellung eines erfindungsgemäßen Glaselements. Mehrere Varianten zur Herstellung sind möglich. Bei einer Variante, hier als Variante a) bezeichnet, wird die Silikonmatte oder Acrylmatte vorher hergestellt bzw. im Handel erworben, während bei einer anderen Variante, hier als Variante b) bezeichnet, die Silikonmatte oder Acrylmatte bei der Herstellung des Glaselements aus flüssigen Vorstufen des Silikonmaterials bzw. Acrylmaterials gebildet wird. Die vorstehenden Angaben zum Glaselement gelten naturgemäß auch für das erfindungsgemäße Verfahren.

Bei der Variante a) umfasst das Verfahren zur Herstellung eines erfindungsgemäßen Glaselements das Auflegen einer Silikonmatte oder einer Acrylmatte auf eine Glasscheibe der Verbundglasscheibe und das Auflegen der Deckscheibe auf die Silikonmatte oder Acrylmatte. Bei diesem Herstellungsverfahren kann es vorteilhaft sein, die Glasscheibe der Verbundglasscheibe mit einem Ölfilm zu versehen, bevor die Silikonmatte oder Acrylmatte darauf aufgelegt wird. Dies kann vorteilhaft sein, um Lufteinschlüsse zwischen Verbundglasscheibe und Silikonmatte bzw. Acrylmatte zu vermeiden. Das Öl kann sich mit der Zeit mit dem Silikon bzw. Acryl verbinden. Zur Bildung des Ölfilms kann das Öl einfach auf die Glasscheibe aufgetragen werden. Beispiele für geeignete Öle sind Silikonöle, Mineralöle oder pflanzliche Öle.

Bei einem nach dieser Variante hergestellten Glaselement ist die Silikonmatte oder Acrylmatte im allgemeinen weder mit der Verbundglas noch mit der Deckscheibe haftend verbunden. Diese Variante ist relativ einfach und schnell auszuführen.

Die vorherige Herstellung der Silikonmatte kann auf bekannte Weise erfolgen, z.B. durch Gießen eines flüssigen Silikons, insbesondere flüssigen Silikonkautschuks, und Aushärten. Bevorzugt wird ein zweikomponentiges Silikon als Ausgangsmaterial verwendet. Das flüssige Silikon ist bevorzugt ein nicht selbsthaftender Silikonkautschuk.

Die vorherige Herstellung der Acrylmatte gemäß der alternativen Ausführungsform kann auf bekannte Weise erfolgen, z.B. durch Gießen eines flüssigen Acrylharzes, insbesondere flüssigen Acrylgießharzes, und Aushärten. Das flüssige Acrylharz ist bevorzugt ein nicht selbsthaftendes Acrylharz.

Das durch die Variante a) gebildete Glaselement kann gegebenenfalls durch eine seitliche Versiegelung abgedichtet werden. Die seitliche Versiegelung kann wie nachstehend bei der Variante b1) erläutert ausgeführt werden.

Bei der Variante b) umfasst das Verfahren zur Herstellung eines erfindungsgemäßen Glaselements das Anordnen der Deckscheibe über der Verbundglasscheibe unter Bildung eines Zwischenraums zwischen einer Glasscheibe der Verbundglasscheibe und der Deckscheibe mit Hilfe mindestens eines Abstandhalters und des Abdichtens der Seitenflächen des Zwischenraums, wobei die Deckscheibe mit mindestens einer Bohrung versehen ist oder wird, das Befüllen des Zwischenraums mit einer flüssigen Silikonzusammensetzung oder einem flüssigen Acrylharz durch die mindestens eine Bohrung und das Aushärten der Silikonzusammensetzung bzw. des Acrylharzes unter Bildung der Zwischenlage.

Die flüssige Silikonzusammensetzung ist bevorzugt ein zweikomponentiges Silikon. Die flüssige Silikonzusammensetzung ist bevorzugt ein nicht selbsthaftendes Silikon. Die flüssige Silikonzusammensetzung ist bevorzugt ein Silikonkautschuk, insbesondere ein nicht selbsthaftender Silikonkautschuk. Das flüssige Acrylharz ist bevorzugt ein flüssiges Acrylgießharz. Das flüssige Acrylharz ist bevorzugt ein nicht selbsthaftendes Acrylharz, bevorzugt ein nicht selbsthaftendes Acrylgießharz.

Die Deckscheibe ist oder wird mit mindestens einer Bohrung versehen. Es handelt sich dabei um ein Durchgangsloch. Zweckmäßigerweise wird die Deckscheibe bereits vor dem Anordnen von Deckscheibe und Verbundglasscheibe mit der mindestens einen Bohrung versehen. Die mindestens eine Bohrung kann z.B. einen Durchmesser von 5 mm bis 25 mm aufweisen.

Die flüssige Zusammensetzung (Silikonzusammensetzung oder Acrylharz) wird durch die mindestens eine Bohrung in den Zwischenraum gefüllt, z.B. durch Eingießen, Einspritzen oder Einpumpen. Es kann zweckmäßig sein, dass die Deckscheibe zwei oder mehr Bohrungen aufweist, wobei die eine Bohrung zum Einfüllen der flüssigen Zusammensetzung und die andere Bohrung zum Entlüften dient, um das Einfüllen zu erleichtern. Gegebenenfalls kann an die Bohrung zum Entlüften auch ein Vakuum angelegt werden, um die Befüllung zu beschleunigen.

Die mindestens eine Bohrung kann nach dem Befüllen oder nach dem Aushärten gegebenenfalls mit einem Verschlusselement, z.B. aus Glas oder Silikon oder einem Dichtstoff, verschlossen werden. Die mindestens eine Bohrung kann alternativ oder zusätzlich durch einen Aufdruck, z.B. einen für die Rutschhemmung verwendeten Aufdruck, verdeckt werden.

Nach Aushärten der in den Zwischenraum gefüllten Silikonzusammensetzung wird die Silikonmatte erhalten. In der alternativen Ausführungsform wird nach Aushärten des in den Zwischenraum gefüllten Acrylharzes die Acrylmatte erhalten. Bei einem nach dieser Variante hergestellten Glaselement besteht ohne weitere Maßnahme zwischen der gebildete Silikonmatte bzw. der gebildeten Acrylmatte und der Verbundglasscheibe und zwischen der gebildete Silikonmatte bzw. der gebildeten Acrylmatte und der Deckscheibe im allgemeinen keine oder nur eine geringe Haftung.

Es kann bei dieser Verfahrensvariante bevorzugt sein, die untere Seite der Deckscheibe, d.h. die Seite, die nach dem Befüllen mit der Silikonzusammensetzung oder mit dem Acrylharz in Kontakt kommt, vor dem Auflegen auf den oder die Abstandshalter mit einem Primer zu versehen. Auf diese Weise kann eine Haftung zwischen der Deckscheibe und der Silikonmatte bzw. der Acrylmatte erreicht werden. Wie vorstehend erläutert kann dies vorteilhaft sein, um die Silikonmatte bzw. die Acrylmatte zusammen mit Deckscheibe von dem eingebauten Glaselement zu entfernen.

Je nach Art von eingesetztem Abstandshalter zur Erzeugung des Zwischenraums kann das erfindungsgemäße Verfahren gemäß Variante b) über zwei Untervarianten, hier als Variante b1) und Variante b2) bezeichnet, ausgeführt werden.

Gemäß der Variante b1) des Verfahrens zur Herstellung des Glaselements gemäß Variante b) werden mehrere Abstandshalter auf die obere Glasscheibe der Verbundglasscheibe positioniert, die Deckscheibe wird auf die positionierten Abstandshalter gelegt und die Seitenflächen des gebildeten Zwischenraums werden durch eine seitliche Versiegelung abgedichtet. Die seitliche Versiegelung erfolgt insbesondere umlaufend um den gesamten Rand des zu bildenden Glaselements.

Es können zwei, drei oder mehr, zweckmäßiger mindestens vier Abstandshalter, auf die Glasscheibe der Verbundglasscheibe positioniert werden. Bei Bedarf können sie auch aufgeklebt werden, um ein Verrutschen zu vermeiden. Die Abstandshalter können eine beliebige Form aufweisen, z.B. in Form eines Zylinders oder eines rechteckigen oder quadratischen Blocks. Die Abstandshalter können aus einem beliebigen Material sein, wobei ein transparentes Material bevorzugt ist. Die Abstandshalter sind bevorzugt aus Silicon, wobei das Silicon bevorzugt durch Aushärten der flüssigen Silikonzusammensetzung, die auch für die Herstellung der Silikonmatte verwendet wird, erhalten wird, d.h. die Abstandshalter und die Silikonmatte sind bevorzugt aus dem gleichen Material. Bei der alternativen Ausführungsform mit einer Acrylmatte sind die Abstandshalter bevorzugt aus Acryl, wobei das Acryl bevorzugt durch Aushärten des flüssigen Acrylharzes, das auch für die Herstellung der Acrylmatte verwendet wird, erhalten wird, d.h. die Abstandshalter und die Acrylmatte sind bevorzugt aus dem gleichen Material.

Zur Anbringung der seitlichen Versiegelung, hier in der Anmeldung auch als Rahmenversiegelung bezeichnet, befindet sich die Anordnung zweckmäßigerweise in einer Umrahmung, z.B. dem Trägerrahmen, die eine Fuge zwischen Umrahmung und Anordnung lässt, um die Versiegelung anzubringen. Für die Versiegelung wird bevorzugt ein Dichtstoff verwendet. Bei der durch den Dichtstoff gebildeten seitlichen Versiegelung handelt es sich bevorzugt um eine elastische Polymerdichtung. Beispiele für geeignete elastische Dichtstoffe sind Silikonkautschuk, Polyurethane, Butylkautschuk und/oder Polyacrylate. Die Versiegelung ist bevorzugt ein Silikon, insbesondere ein elastisches Silikon.

Gemäß der Variante b2) des Verfahrens zur Herstellung des Glaselements gemäß Variante b) wird ein Abdichtungsband umlaufend oben auf den Rand der Glasscheibe der Verbundglasscheibe geklebt, so dass das Abdichtungsband sowohl als Abstandshalter als auch als Abdichtung der Seitenflächen des Zwischenraums dient, und die Deckscheibe wird auf das aufgeklebte Abdichtungsband unter Bildung des Zwischenraums aufgelegt.

Es versteht sich, dass das Abdichtungsband stabil und ausreichend dick ist, um als Abstandshalter geeignet zu sein. Geeignete Abdichtungsbänder sind im Handel erhältlich. Das Abdichtungsband kann z.B. ein Acrylband oder ein Silikonband sein. Die Abdichtungsbänder können z.B. einen Schaumstoffkern aufweisen. Durch das umlaufende Abdichtungsband werden die Seitenflächen des nach Auflegen der Deckscheibe erhaltenen Zwischenraums abgedichtet.

Auch bei der Variante b2) kann das gebildete Glaselement durch eine seitliche Versiegelung abgedichtet werden. Die seitliche Versiegelung kann wie bei der Variante b1) erläutert erfolgen.

Die Verbundglasscheibe kann vor dem Ausführen der Verfahrensschritte gemäß Variante a) oder Variante b) in einem Trägerrahmen positioniert werden.

Das erfindungsgemäße Verfahren kann an einer Produktionsstätte durchgeführt werden. Die hergestellten Glaselemente müssen dann an den Ort des gewünschten Einbaus transportiert werden. Der Transport kann erschwert sein, da das Glaselement insgesamt keinen festen Verbund bildet. So sind z.B. Hebevorrichtungen, die nur der Oberseite oder Unterseite des Glaselements ansetzen, ohne zusätzliche Sicherungsmaßnahmen kaum geeignet. Gegebenenfalls kann das Glaselement für den Transport mit temporären Haltevorrichtungen, z.B. Klebebändern oder Klammern, fixiert werden.

In einer bevorzugten Ausführungsform kann das erfindungsgemäße Verfahren vor Ort durchgeführt, d.h. das Glaselement wird direkt am Einsatzort für die begehbare Verglasung zusammengebaut, z.B. in einem Trägerrahmen, der für die Aufnahme des Glaselements vorgesehen ist.

Die Erfindung betrifft auch eine begehbare Verglasung, die das erfindungsgemäße Glaselement umfasst. Das Glaselement ist im Allgemeinen auf einer Tragstruktur, die am Ort der Verglasung, z.B. einem Boden, montiert ist, gelagert. Bei der Tragstruktur kann es sich um die gängigen Tragstrukturen handeln. Tragstrukturen für die punktförmige Lagerung sind sogenannte Punkthalter. Es können ein oder mehrere Punkthalter, z.B. 4 oder 6 oder 9 Punkthalter, als Tragstruktur für ein Glaselement verwendet werden. Es kann eine Tragstruktur für eine zweiseitig linienförmige Lagerung verwendet werden. Bevorzugt ist eine Tragstruktur für eine vierseitig linienförmige Lagerung verwendet, es handelt sich dabei bevorzugt um den vorstehend bereits mehrfach erwähnten Trägerrahmen.

Der Trägerrahmen ist so dimensioniert, dass zwischen dem Rand des Trägerrahmens und dem Glaselement eine umlaufende Fuge verbleibt.

Distanzklötze können eingesetzt werden, um den Kontakt zwischen Trägerrahmenrand und Glas zu vermeiden. Die Glaselemente werden in der Regel nicht direkt auf den Trägerrahmen aufgesetzt, sondern auf eine auf den Trägerrahmen aufgebrachte Auflage, die bevorzugt aus einem elastischen Material ist, wie z.B. Silikon oder Neopren. Der Trägerrahmen kann eine komplexere Struktur annehmen, wenn das Glaselement zusätzliche Komponenten wie z.B. eine Isolierglaseinheit aufweist, wie in Fig. 8 gezeigt.

Die Fuge zwischen Trägerrahmen und Glaselement wird mit einem Dichtstoff versiegelt, in der Regel mit einer elastischen Dichtstoff. Beispiele für geeignete elastische Dichtstoffe sind Silikonkautschuk, Polyurethane, Butylkautschuk und/oder Polyacrylate. Bevorzugt ist eine elastische Silikonversiegelung.

Bei der begehbaren Verglasung kann es sich z.B. um einen Glasboden, z.B. ein Glasfußboden für Gebäude (innen und außen) oder eine Brückenverglasung, ein Podest, einen Aufzug, eine Treppenstufe oder eine begehbare Überkopfverglasung handeln. Die begehbare Verglasung, wie z.B. der Glasboden, kann im Innenbereich oder im Außenbereich installiert sein.

Durch die Silikonmatte oder die Acrylmatte kann in dem erfindungsgemäßen Glaselement die Deckscheibe problemlos von der Verbundglasscheibe abgelöst werden. Dies ermöglicht eine deutlich einfachere und preiswertere Reparatur von begehbaren Verglasungen, da im Fall eines Defekts oder einer Abnutzung nur die obere Deckscheibe und nicht das gesamte Glaselement ausgetauscht werden muss.

Die Erfindung betrifft auch die Verwendung des erfindungsgemäßen Glaselements für eine begehbare Verglasung. Beispiele für begehbare Verglasungen sind vorstehend genannt.

Die Erfindung wird im Folgenden anhand von Zeichnungen näher erläutert, die Beispiele für erfindungsgemäße Glaselemente und das erfindungsgemäße Verfahren zeigen, die den Umfang der Erfindung aber nicht beschränken sollen.

Es zeigt:
Fig. 1 eine schematische Darstellung eines erfindungsgemäßen Glaselements im Querschnitt,
Fig. 2a-c eine schematische Darstellung des erfindungsgemäßen Verfahrens gemäß Variante b2) zur Herstellung des Glaselements,
Fig. 3 einen schematischen Ausschnitt eines gemäß Variante b2) hergestellten erfindungsgemäßen Glaselements in einem Trägerrahmen im Querschnitt,
Fig. 4a-d eine schematische Darstellung des erfindungsgemäßen Verfahrens gemäß Variante b1) zur Herstellung des Glaselements,
Fig. 5 einen schematischen Ausschnitt eines gemäß Variante b1) hergestellten erfindungsgemäßen Glaselements in einem Trägerrahmen im Querschnitt,
Fig. 6a-d eine schematische Darstellung des erfindungsgemäßen Verfahrens gemäß Variante a) zur Herstellung des Glaselements,
Fig. 7 einen schematischen Ausschnitt eines gemäß Variante a) hergestellten erfindungsgemäßen Glaselements in einem Trägerrahmen im Querschnitt,
Fig. 8 eine schematische Darstellung eines erfindungsgemäßen Glaselements mit einer zusätzlichen Glasisoliereinheit im Querschnitt.

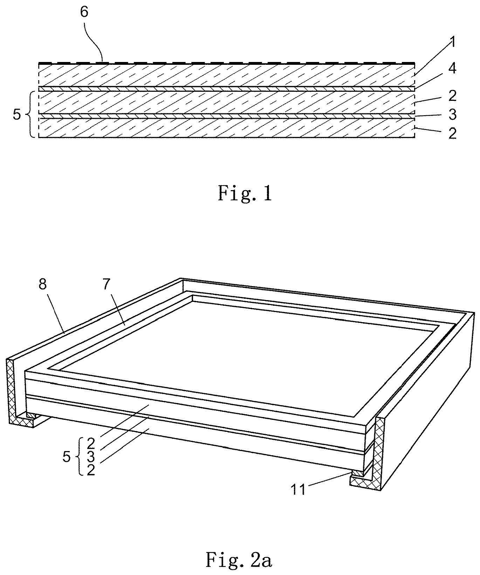

In den Fig. 2a-c, 4a-d und 6a-d ist ein Schnitt gezeigt, bei dem eine Seite des vierseitigen umlaufenden Trägerrahmens nicht dargestellt ist. Der Trägerrahmen ist mit einer Profilkante ausgebildet und für eine vierseitig linienförmige Lagerung geeignet, insbesondere wenn das Glaselement vor Ort zusammengebaut wird. Es versteht sich, dass in Fig. 8 nur ein Teilausschnitt des Glaselements wiedergegeben ist.

In den Fig. 1 bis 8 sind Ausführungsformen und Herstellungsverfahren gezeigt, die als Zwischenlage eine Silikonmatte aufweisen, wobei bei einigen Varianten eine flüssige Silikonzusammensetzung zur Bildung der Silikonmatte eingesetzt wird. Alternative Ausführungsformen und Herstellungsverfahren sind analog zu den Ausführungsformen und Herstellungsverfahren gemäß den Fig. 1 bis 8, außer dass statt der Silikonmatte eine Acrylmatte als Zwischenlage eingesetzt wird und naturgemäß statt der flüssigen Silikonzusammensetzung ein flüssiges Acrylharz, insbesondere ein flüssiges Acrylgießharz, insbesondere ein nicht selbsthaftendes Acrylharz bzw. Acrylgießharz, zur Bildung der Acrylmatte eingesetzt wird. Alle anderen Ausführungen zu diesen Figuren gelten entsprechend.

In Fig. 1 ist ein erfindungsgemäßes Glaselement schematisch im Querschnitt gezeigt. Das Glaselement umfasst eine Verbundglasscheibe 5, die bevorzugt eine Verbundglassicherheitsscheibe ist. Die Verbundglasscheibe ist aus zwei Glasscheiben 2 gebildet, die mittels einer Polymerschicht 3 miteinander verbunden sind. Die Glasscheiben 2 können aus Floatglas oder teilvorgespanntem Glas sein. Die Polymerschicht 3 ist bevorzugt eine PVB-Schicht. Das Glaselement umfasst ferner eine Deckscheibe 1, die z.B. aus Einscheibensicherheitsglas oder chemisch vorgespanntem Glas ist. Zwischen der oberen Glasscheibe 2 der Verbundglasscheibe 5 und der Deckscheibe 1 ist eine Silikonmatte 4 angeordnet, die bevorzugt aus einem Silikonelastomer gebildet ist. Auf der Deckscheibe ist eine optionale rutschhemmende Oberfläche 6 in Form eines strukturierten Aufdrucks gezeigt. Zwischen der Deckscheibe 1 und der Silikonmatte 4 und/oder zwischen der Verbundglasscheibe 5 und der Silikonmatte 4 besteht keine Haftung oder eine geringe Haftung. Die Deckscheibe kann problemlos von der Verbundglasscheibe abgelöst werden. In der alternativen Ausführungsform ist in dem Glaselement gemäß Fig. 1 anstelle der Silikonmatte 4 eine Acrylmatte angeordnet, die bevorzugt durch Härtung eines flüssigen Acrylharzes gebildet werden kann.

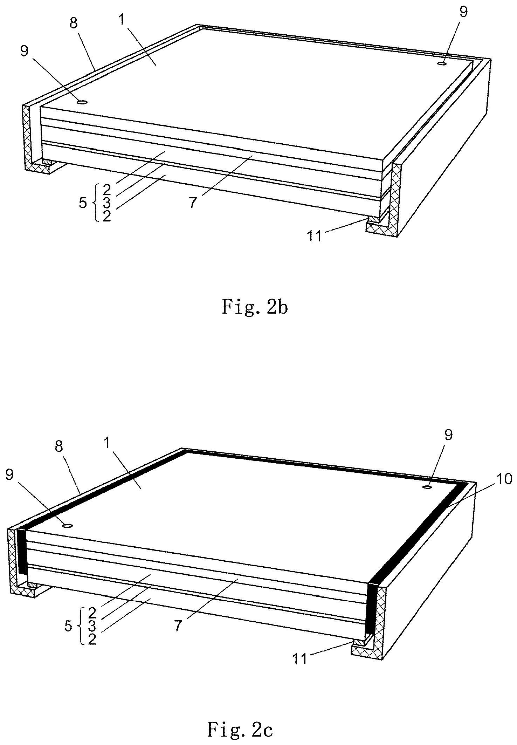

Die Fig. 2a-c zeigen eine schematische Darstellung des erfindungsgemäßen Verfahrens gemäß Variante b2) zur Herstellung des Glaselements. Fig. 2a zeigt ein als Verbundglasscheibe 5 verwendetes Verbundsicherheitsglas (VSG), das in einen Trägerrahmen 8 gelegt wird. Ein Abdichtungsband 7, z.B. ein Acrylband oder ein Silikonband, ist umlaufend auf den Rand der Oberseite der Verbundglasscheibe 5 geklebt. Die Verbundglasscheibe wird auf der Oberseite nicht mit einem Primer versehen. Gemäß Fig. 2b wird eine Deckscheibe 1 auf das Abdichtungsband 7 gelegt. Die Deckscheibe ist auf der Unterseite mit einem Primer versehen. Die Deckscheibe 1 ist ferner am Rand mit einer Bohrung 9 versehen. Über die Bohrung 9 wird eine flüssige Silikonzusammensetzung, bevorzugt flüssiger, nicht selbsthaftender Silikonkautschuk, in den gebildeten Zwischenraum zwischen Deckscheibe 1 und Verbundglasscheibe 5 eingepumpt (nicht gezeigt). Auf der anderen Seite der Deckscheibe 1 ist eine zweite Bohrung als Entlüftungsbohrung vorhanden. An die zweite Bohrung kann gegebenenfalls ein Vakuum angelegt werden. Das eingefüllte Silikon härtet mit der Zeit aus und bildet die Silikonmatte (nicht gezeigt), die bevorzugt aus Silikonelastomer ist. Die Bohrungen können durch einen Deckel verschlossen werden. Gemäß Fig. 2c wird die Fuge zwischen Trägerrahmen 8 und Glaselement mit einer Rahmenversiegelung 10 als seitlicher Versiegelung, z.B. aus Silikon, abgedichtet. Zwischen der Deckscheibe 1 und der Silikonmatte 4 besteht eine Haftverbindung, da eine Primerschicht auf der Unterseite der Deckscheibe aufgebracht wurde. Zwischen der Verbundglasscheibe 5 und der Silikonmatte 4 besteht dagegen keine Haftung oder nur eine geringe Haftung. Daher kann die Deckscheibe 1 zusammen mit der Silikonmatte problemlos von der Verbundglasscheibe abgelöst werden.

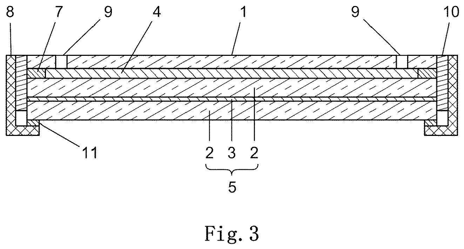

In Fig. 3 ist ein Teilausschnitt des Glaselements, das gemäß dem in den Fig. 2a-c beschriebenen Verfahren erhalten wird, im Querschnitt in einem Trägerrahmen gezeigt. Die Bedeutung der Bezugszeichen ist entsprechend den Fig. 2a-c. Zwischen dem Glaselement und dem Trägerrahmen befindet sich eine Auflage 11, z.B. aus elastischem Silikon, die in den Fig. 2a-c nicht gezeigt ist. Die zwischen der Deckscheibe 1 und der Silikonmatte 4 vorliegende Primerschicht ist nicht gezeigt.

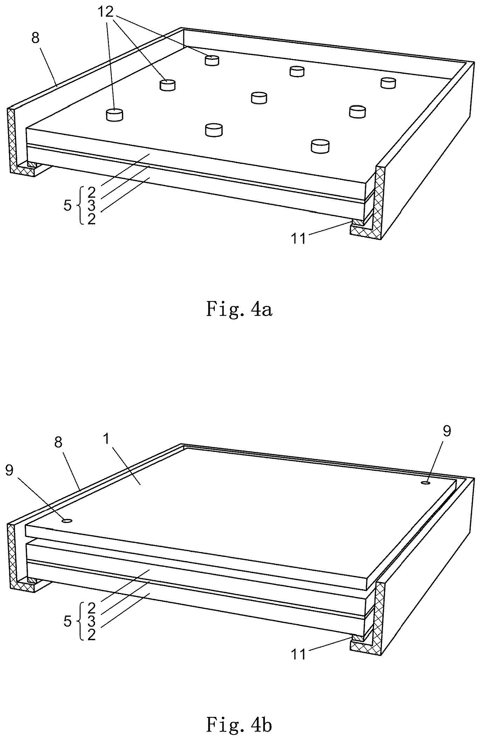

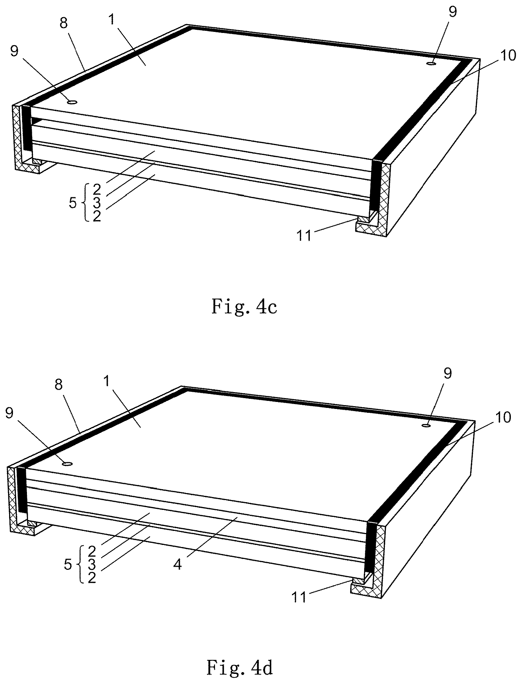

Die Fig. 4a-d zeigen eine schematische Darstellung des erfindungsgemäßen Verfahrens gemäß Variante b1) zur Herstellung des Glaselements. Fig. 4a zeigt ein als Verbundglasscheibe 5 verwendetes Verbundsicherheitsglas (VSG), das in einem Trägerrahmen 8 gelegt wird. Abstandshalter 12 werden auf die Verbundglasscheibe 5 gelegt. Es sind neun gezeigt, es können aber auch mehr oder weniger, z.B. 4 oder 6 Abstandshalter, positioniert werden. Die Abstandshalter 12 sind durch Aushärten der gleichen flüssigen Silikonzusammensetzung, die für die Bildung der Silikonmatte verwendet wird, gebildet. Die Verbundglasscheibe wird auf der Oberseite nicht mit einem Primer versehen. Gemäß Fig. 4b wird eine Deckscheibe 1 auf die Abstandshalter 12 gelegt. Die Deckscheibe ist auf der Unterseite mit einem Primer versehen. Die Deckscheibe 1 ist ferner am Rand mit einer Bohrung 9 versehen. Auf der anderen Seite der Deckscheibe 1 ist eine zweite Bohrung als Entlüftungsbohrung vorhanden. Gemäß Fig. 4c wird die Fuge zwischen Trägerrahmen 8 und Glaselement umlaufend mit einer Rahmenversiegelung 10 als seitlicher Versiegelung, z.B. aus Silikon, abgedichtet. Auf diese Weise dient die Rahmenversiegelung direkt zur Abdichtung der Seitenflächen des Zwischenraums. Die erhaltene Anordnung ist in Fig. 4d gezeigt, bei der über die Bohrung 9 eine flüssige Silikonzusammensetzung, bevorzugt flüssiger, nicht selbsthaftender Silikonkautschuk, in den gebildeten Zwischenraum zwischen Deckscheibe 1 und Verbundglasscheibe 5 eingepumpt wird. An die zweite Bohrung kann gegebenenfalls ein Vakuum angelegt werden. Das eingefüllte Silikon härtet mit der Zeit aus und bildet die Silikonmatte (nicht gezeigt), die bevorzugt aus Silikonelastomer ist. Die Bohrungen können durch einen Deckel verschlossen werden. Zwischen der Deckscheibe 1 und der Silikonmatte besteht eine Haftverbindung, da eine Primerschicht auf der Unterseite der Deckscheibe aufgebracht wurde. Zwischen der Verbundglasscheibe 5 und der Silikonmatte 4 besteht dagegen keine Haftung oder nur eine geringe Haftung. Daher kann die Deckscheibe 1 zusammen mit der Silikonmatte problemlos von der Verbundglasscheibe abgelöst werden.

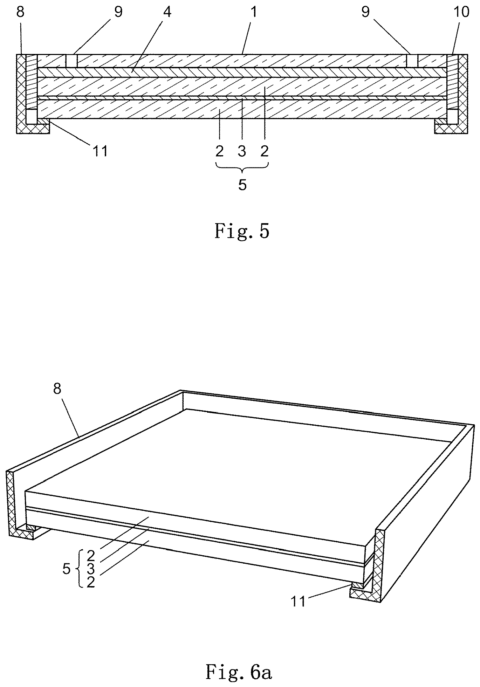

In Fig. 5 ist ein Teilausschnitt des Glaselements, das gemäß dem in den Fig. 4a-d beschriebenen Verfahren erhalten wird, im Querschnitt in einem Trägerrahmen gezeigt. Die Bedeutung der Bezugszeichen ist entsprechend den Fig. 4a-d. Die Entlüftungsbohrung ist nicht gezeigt. Zwischen dem Glaselement und dem Trägerrahmen befindet sich eine Auflage 11, z.B. aus elastischem Silikon, die in den Fig. 4a-d nicht gezeigt ist. Die zwischen der Deckscheibe 1 und der Silikonmatte 4 vorhandene Primerschicht ist nicht gezeigt.

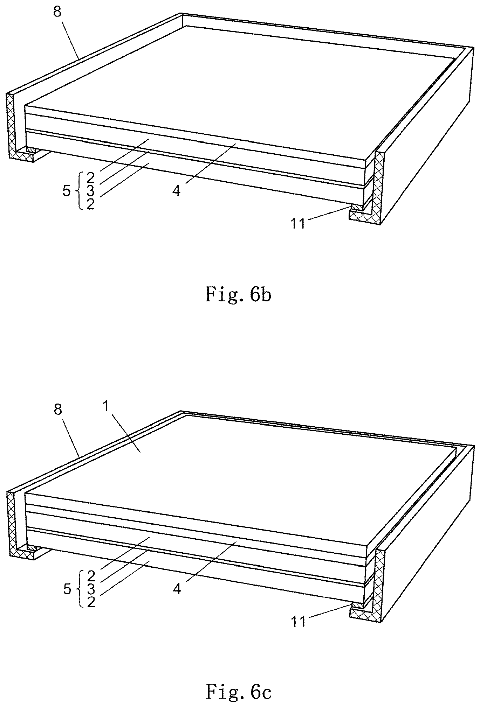

Die Fig. 6a-d zeigen eine schematische Darstellung des erfindungsgemäßen Verfahrens gemäß Variante a) zur Herstellung des Glaselements. Fig. 6a zeigt ein als Verbundglasscheibe 5 verwendetes Verbundsicherheitsglas (VSG), das in einen Trägerrahmen 8 gelegt wird. Die Verbundglasscheibe wird auf der Oberseite nicht mit einem Primer versehen. Gemäß Fig. 6b wird eine Silikonmatte 4 in fester Form auf die Verbundglasscheibe 5 aufgelegt. Gemäß Fig. 6c wird die Deckscheibe 1 auf die Silikonmatte 4 gelegt. Die Deckscheibe ist auf der Unterseite nicht mit einem Primer versehen. Gemäß Fig. 6d wird die Fuge zwischen Trägerrahmen 8 und Glaselement mit einer Rahmenversiegelung 10 als seitlicher Versiegelung, z.B. aus Silikon, abgedichtet. Es besteht weder zwischen der Deckscheibe 1 und der Silikonmatte 4 noch zwischen der Verbundglasscheibe 5 und der Silikonmatte 4 eine Haftverbindung. Daher kann die Deckscheibe 1 problemlos abgelöst werden.

In Fig. 7 ist ein Teilausschnitt des Glaselements, das gemäß dem in den Fig. 6a-d beschriebenen Verfahren erhalten wird, im Querschnitt in einem Trägerrahmen gezeigt. Die Bedeutung der Bezugszeichen ist entsprechend den Fig. 6a-d. Zwischen dem Glaselement und dem Trägerrahmen befindet sich eine Auflage 11, z.B. aus elastischem Silikon, die in den Fig. 6a-d nicht gezeigt ist.

In Fig. 8 ist ein schematischer Teilausschnitt eines erfindungsgemäßen Glaselements in einem Trägerrahmen 8 gezeigt. Das Glaselement umfasst eine Verbundsicherheitsglasscheibe 5 und eine Deckscheibe 1, wobei zwischen Verbundsicherheitsglasscheibe 5 und Deckscheibe 1 eine Silikonmatte 4 angeordnet ist. Das Glaselement umfasst ferner ein zweites Verbundglas 13, das unterhalb der Verbundsicherheitsglasscheibe 5 angeordnet ist und als Isolierglaseinheit dient. Verbundsicherheitsglasscheibe 5 und zweite Verbundglasscheibe 13 sind mittels Abstandshalter 14 voneinander beabstandet, so dass ein mit Luft oder einem anderen Gas gefüllter Zwischenraum ausgebildet wird. Das zweite Verbundglas 13 ist auf der Oberseite mit einer Beschichtung versehen, die die Wärmeisolierwirkung weiter verbessern kann. Der Trägerrahmen 8 weist ein mehrwinkliges Profil auf, wobei eine untere Profilkante, die mit einer elastischen Auflage 16 versehen ist, die zweite Verbundglasscheibe 13 trägt und eine obere Profilkante, die mit einer elastischen Auflage 11 versehen ist, die Verbundglasscheibe 5 trägt.

### Bezugszeichenliste:

- 1: Deckscheibe
- 2: Glasscheibe
- 3: Polymerschicht
- 4: Zwischenlage
- 5: Verbundglasscheibe
- 6: rutschhemmende Oberfläche (optional)
- 7: Abdichtungsband, auch Abstandshalter
- 8: Trägerrahmen
- 9: Bohrung
- 10: Rahmenversiegelung
- 11: Auflage
- 12: Abstandshalter
- 13: zweite Verbundglasscheibe
- 14: Abstandshalter
- 15: Beschichtung
- 16: Auflage

## Patentansprüche

1. Begehbares Glaselement, umfassend
eine Verbundglasscheibe (5) umfassend mindestens zwei Glasscheiben (2), die mit mindestens einer zwischen den Glasscheiben befindlichen Polymerschicht (3) aus Polyvinylbutyral (PVB), Ethylenvinylacetat (EVA), Polyurethan und/oder Gemischen davon miteinander verbunden sind,
eine Deckscheibe (1) und
eine Zwischenlage (4), die zwischen der Verbundglasscheibe (5) und der Deckscheibe (1) angeordnet ist,
**dadurch gekennzeichnet, dass** die Zwischenlage (4) eine Silikonmatte oder eine Acrylmatte ist.

2. Begehbares Glaselement nach Anspruch 1, wobei die Silikonmatte oder die Acrylmatte eine Dicke im Bereich von 0,15 mm bis 5 mm, bevorzugt 1 mm bis 2 mm, aufweist, und/oder wobei die Silikonmatte oder die Acrylmatte aus einem Silikonmaterial bzw. Acrylmaterial mit einer Shore A-Härte gemäß JIS K 6249, im Bereich von 30 bis 70 ist.

3. Begehbares Glaselement nach Anspruch 1 oder Anspruch 2, wobei die obere Seite der Deckscheibe (1) eine rutschhemmende Oberfläche (6) aufweist.

4. Begehbares Glaselement nach irgendeinem der Ansprüche 1 bis 3, wobei die Deckscheibe (1) ein Einscheibensicherheitsglas, vorzugsweise mit einer Dicke von 6 mm bis 12 mm, oder ein chemisch vorgespanntes Glas, vorzugsweise mit einer Dicke von 6 mm bis 12 mm, ist.

5. Begehbares Glaselement nach irgendeinem der Ansprüche 1 bis 4, wobei sich zwischen der Deckscheibe (1) und der Zwischenlage (4) und/oder zwischen der Zwischenlage (4) und der Verbundglasscheibe (5) keine Primerschicht befindet.

6. Begehbares Glaselement nach irgendeinem der Ansprüche 1 bis 5, wobei sich entweder zwischen der Deckscheibe (1) und der Zwischenlage (4) oder zwischen der Zwischenlage (4) und der Verbundglasscheibe eine Primerschicht befindet.

7. Begehbares Glaselement nach irgendeinem der Ansprüche 1 bis 6, wobei das Glaselement in einem Trägerrahmen (8) angeordnet ist und eine zwischen dem Glaselement und dem Trägerrahmen gebildete Fuge mit einem Dichtstoff (10) versiegelt ist.

8. Begehbares Glaselement nach irgendeinem der Ansprüche 1 bis 7, ferner umfassend eine Isolierglaseinheit und/oder ein Brandschutzglas.

9. Begehbares Glaselement nach irgendeinem der Ansprüche 1 bis 8, wobei die Zwischenlage (4) eine vorfabrizierte Silikonmatte oder Acrylmatte ist, die zwischen einer Glasscheibe (2) der Verbundglasscheibe (5) und der Deckscheibe (1) eingelegt ist.

10. Begehbares Glaselement nach irgendeinem der Ansprüche 1 bis 9, wobei die Silikonmatte durch Härten eines nicht selbsthaftenden Silikons, bevorzugt eines nicht selbsthaftenden Silikonkautschuks, gebildet ist, oder wobei die Acrylmatte durch Härten eines nicht selbsthaftenden Acrylharzes, bevorzugt eines nicht selbsthaftenden Acrylgießharzes, gebildet ist.

11. Verfahren zur Herstellung eines begehbaren Glaselements nach irgendeinem der Ansprüche 1 bis 10, umfassend
a) das Auflegen einer Silikonmatte (4) oder einer Acrylmatte auf eine Glasscheibe (2) der Verbundglasscheibe (5) und das Auflegen der Deckscheibe (1) auf die Silikonmatte (4) oder die Acrylmatte oder
b) das Anordnen der Deckscheibe (1) über der Verbundglasscheibe (5) unter Bildung eines Zwischenraums zwischen einer Glasscheibe (2) der Verbundglasscheibe (5) und der Deckscheibe (1) mit Hilfe mindestens eines Abstandhalters (7, 12) und des Abdichtens der Seitenflächen des Zwischenraums, wobei die Deckscheibe (1) mit mindestens einer Bohrung (9) versehen ist oder wird, das Befüllen des Zwischenraums mit einer flüssigen Silikonzusammensetzung oder einem flüssigen Acrylharz durch die mindestens eine Bohrung (9) und das Aushärten der Silikonzusammensetzung oder des Acrylharzes unter Bildung der Silikonmatte (4) oder der Acrylmatte, wobei die mindestens eine Bohrung nach dem Befüllen oder nach dem Aushärten gegebenenfalls mit einem Verschlusselement verschlossen wird.

12. Verfahren nach Anspruch 11, wobei die Verbundglasscheibe (5) vor dem Ausführen der Verfahrensschritte gemäß Variante a) oder Variante b) in einem Trägerrahmen (8) positioniert wird.

13. Verfahren nach Anspruch 11 oder Anspruch 12, wobei
im Fall der Herstellung gemäß Variante a) die Glasscheibe (2) der Verbundglasscheibe (5) mit einem Ölfilm versehen wird, bevor die Silikonmatte (4) oder die Acrylmatte aufgelegt wird, oder
im Fall der Herstellung gemäß Variante b) die untere Seite der Deckscheibe (2) vor dem Auflegen auf den oder die Abstandshalter (7, 12) mit einer Primer versehen wird.

14. Verfahren nach irgendeinem der Ansprüche 11 bis 13, wobei im Fall der Herstellung gemäß Variante b)
b1) mehrere Abstandshalter (12) auf die Glasscheibe (2) der Verbundglasscheibe (5) positioniert werden, die Deckscheibe (1) auf die positionierten Abstandshalter gelegt wird und die Seitenflächen des gebildeten Zwischenraums durch eine seitliche Versiegelung (10) abgedichtet werden, oder
b2) Abdichtungsband (7) umlaufend oben auf den Rand der Glasscheibe (2) der Verbundglasscheibe (5) geklebt wird, so dass das Abdichtungsband sowohl als Abstandshalter als auch als Abdichtung der Seitenflächen des Zwischenraums dient, und die Deckscheibe (1) auf das aufgeklebte Abdichtungsband unter Bildung des Zwischenraums aufgelegt wird.

15. Verwendung eines begehbaren Glaselements nach einem der Ansprüche 1 bis 10 für eine begehbare Verglasung, beispielsweise für einen Glasboden, ein Podest, einen Aufzug, eine Treppenstufe oder eine begehbare Überkopfverglasung.

## Claims

1. Walk-on glass element, comprising
a laminated glass pane (5) comprising at least two glass panes (2) which are joined together by at least one polymer layer (3) of polyvinyl butyral (PVB), ethylene vinyl acetate (EVA), polyurethane and/or mixtures thereof which is arranged between the glass panes,
a cover pane (1) and
an interlayer (4), which is arranged between the laminated glass pane (5) and the cover pane (1),
**characterized in that** the interlayer (4) is a silicone mat or an acrylic mat.

2. Walk-on glass element according to claim 1, wherein the silicone mat or the acrylic mat has a thickness in the range from 0.15 mm to 5 mm, preferably 1 mm to 2 mm, and/or wherein the silicone mat or the acrylic mat is made of a silicone material or acrylic material with a Shore A hardness according to JIS K 6249 in the range from 30 to 70.

3. Walk-on glass element according to claim 1 or claim 2, wherein the upper side of the cover pane (1) has a slip-resistant surface (6).

4. Walk-on glass element according to any one of claims 1 to 3, wherein the cover pane (1) is a single pane safety glass, preferably with a thickness of 6 mm to 12 mm, or a chemically toughened pane, preferably with a thickness of 6 mm to 12 mm.

5. Walk-on glass element according to any one of claims 1 to 4, wherein there is no primer layer between the cover pane (1) and the interlayer (4) and/or between the interlayer (4) and the laminated glass pane (5).

6. Walk-on glass element according to any one of claims 1 to 5, wherein there is a primer layer either between the cover pane (1) and the interlayer (4) or between the interlayer (4) and the laminated glass pane.

7. Walk-on glass element according to any one of claims 1 to 6, wherein the glass element is arranged in a support frame (8) and a groove formed between the glass element and the support frame is sealed with a sealant (10).

8. Walk-on glass element according to any one of claims 1 to 7, further comprising an insulating glass unit and/or a fire-resistant glass.

9. Walk-on glass element according to any one of claims 1 to 8, wherein the interlayer (4) is a prefabricated silicone mat or acrylic mat which is inserted between a glass pane (2) of the laminated glass pane (5) and the cover pane (1).

10. Walk-on glass element according to any one of claims 1 to 9, wherein the silicone mat is formed by curing a non-self-adhesive silicone, preferably a non-self-adhesive silicone rubber, or wherein the acrylic mat is formed by curing a non-self-adhesive acrylic resin, preferably a non-self-adhesive acrylic casting resin.

11. Method for manufacturing a walk-on glass element according to any one of claims 1 to 10, comprising
a) placing a silicone mat (4) or an acrylic mat on a glass pane (2) of the laminated glass pane (5) and placing the cover sheet (1) on the silicone mat (4) or the acrylic mat or
b) arranging the cover pane (1) over the laminated glass pane (5) thereby forming an interspace between a glass pane (2) of the laminated pane (5) and the cover pane (1) with the aid of at least one spacer (7, 12) and sealing the side surfaces of the interspace, wherein the cover pane (1) is provided with at least one bore (9), filling the interspace with a liquid silicone composition or a liquid acrylic resin through the at least one bore (9) and the curing of the silicone composition or the acrylic resin to form the silicone mat (4) or the acrylic mat, wherein the at least one bore after filling or after curing optionally being closed with a closure element.

12. Method according to claim 11, wherein the laminated glass pane (5), before carrying out the method steps according to variant a) or variant b) is positioned in a carrier frame (8).

13. Method according to claim 11 or claim 12, wherein
in the case of manufacture according to variant a), the glass pane (2) of the laminated glass pane (5) is provided with an oil film before the silicone mat (4) or the acrylic mat is applied, or
in the case of manufacture according to variant b), the lower side of the cover pane (2) is provided with a primer before it is placed on the spacer(s) (7, 12).

14. Method according to any one of claims 11 to 13, wherein in the case of the manufacture according to variant b)
b1) a plurality of spacers (12) is positioned on the glass pane (2) of the laminated glass pane (5), the cover pane (1) is placed on the positioned spacers and the side surfaces of the interspace formed are sealed by a lateral sealant, or
b2) sealing tape (7) is glued all around the top of the edge of the glass pane (2) of the laminated glass pane (5), so that the sealing tape serves both as a spacer and as a sealant for the side surfaces of the interspace, and the cover pane (1) is glued onto the glued-on sealing tape thereby forming the interspace.

15. Use of a walk-on glass element according to any one of claims 1 to 10 for a walk-on glazing, for example for a glass floor, a platform, an elevator, a stairstep or a walk-on overhead glazing.

## Revendications

1. Elément en verre praticable, comprenant
un vitrage feuilleté (5) comprenant au moins deux vitres (2) reliées entre elles par au moins une couche de polymère (3) de polybutyral de vinyle (PVB), d'éthylène-acétate de vinyle (EVA), de polyuréthane et/ou de leurs mélanges, disposée entre les vitres,
une vitre de couverture (1) et
une couche intermédiaire (4), disposée entre la vitre feuilletée (5) et la vitre de couverture (1),
**caractérisé par le fait que** l'intermédiaire (4) est un mat de silicone ou un mat acrylique.

2. Elément en verre praticable selon la revendication 1, dans lequel le mat de silicone ou le mat acrylique a une épaisseur comprise entre 0,15 mm et 5 mm, de préférence entre 1 mm et 2 mm, et/ou dans lequel le mat de silicone ou le mat acrylique est constitué d'un matériau de silicone ou d'un matériau acrylique dont la dureté Shore A selon JIS K 6249 est comprise entre 30 et 70.

3. Elément en verre praticable selon la revendication 1 ou la revendication 2, dans lequel la face supérieure de la vitre de couverture (1) présente une surface antidérapante (6).

4. Elément en verre praticable selon l'une des revendications 1 à 3, dans lequel la vitre de couverture (1) est un verre de sécurité simple, de préférence d'une épaisseur comprise entre 6 mm et 12 mm, ou une vitre trempée chimiquement, de préférence d'une épaisseur comprise entre 6 mm et 12 mm.

5. Elément en verre praticable selon l'une quelconque des revendications 1 à 4, dans lequel il n'y a pas de couche d'apprêt entre la vitre de couverture (1) et la couche intermédiaire (4) et/ou entre la couche intermédiaire (4) et le un vitrage feuilleté (5).

6. Elément en verre praticable selon l'une quelconque des revendications 1 à 5, dans lequel il existe une couche d'apprêt entre la vitre de couverture (1) et la couche intermédiaire (4) ou entre la couche intermédiaire (4) et le vitrage feuilleté.

7. Elément en verre praticable selon l'une des revendications 1 à 6, dans lequel l'élément en verre est disposé dans un cadre de support (8) et une rainure formée entre l'élément en verre et le cadre de support est scellée à l'aide d'un produit d'étanchéité (10).

8. Elément vitré praticable selon l'une des revendications 1 à 7, comprenant en outre un vitrage isolant et/ou un vitrage résistant au feu.

9. Elément en verre praticable selon l'une des revendications 1 à 8, dans lequel la couche intermédiaire (4) est un mat de silicone ou un mat acrylique préfabriqué qui est inséré entre une vitre (2) du vitrage feuilleté (5) et la vitre de couverture (1).

10. Elément en verre praticable selon l'une quelconque des revendications 1 à 9, dans lequel le mat de silicone est formé par durcissement d'un silicone non auto-adhésif, de préférence un caoutchouc de silicone non auto-adhésif, ou dans lequel le mat acrylique est formé par durcissement d'une résine acrylique non auto-adhésive, de préférence une résine de coulée acrylique non auto-adhésive.

11. Procédé de fabrication d'un élément en verre praticable selon l'une des revendications 1 à 10, comprenant
a) placer un tapis de silicone (4) ou un tapis acrylique sur une vitre (2) du vitrage feuilleté (5) et placer la vitre de couverture (1) sur le tapis de silicone (4) ou le tapis acrylique ou
b) disposer la vitre de couverture (1) sur le vitrage feuilleté (5) de manière à former un espace intermédiaire entre une vitre (2) du vitrage feuilleté et la vitre de couverture (1) à l'aide d'au moins un espaceur (7, 12) et sceller les surfaces latérales de l'espace intermédiaire, la vitre de couverture (1) étant pourvue d'au moins un alésage (9), le remplissage de l'espace intermédiaire avec une composition de silicone liquide ou une résine acrylique liquide à travers l'au moins un alésage (9) et le durcissement de la composition de silicone ou de la résine acrylique pour former le mat de silicone (4) ou le mat acrylique, l'au moins un alésage après le remplissage ou après le durcissement étant éventuellement fermé par un élément d'obturation.

12. Procédé selon la revendication 11, dans lequel le vitrage feuilleté (5), avant d'effectuer les étapes du procédé selon la variante a) ou la variante b), est placée dans un cadre porteur (8).

13. Procédé selon la revendication 11 ou la revendication 12, dans lequel dans le cas de la fabrication selon la variante a), la vitre (2) du vitrage feuilleté (5) est recouverte d'un film d'huile avant l'application du mat de silicone (4) ou du mat acrylique, ou dans le cas de la fabrication selon la variante b), la face inférieure de la vitre de couverture (2) est recouverte d'un apprêt avant d'être placée sur le(s) un espaceur(s) (7, 12).

14. Procédé selon l'une quelconque des revendications 11 à 13, dans lequel, dans le cas de la fabrication selon la variante b)
b1) plusieurs un espaceurs (12) sont placés sur la vitre (2) du vitrage feuilleté (5), la vitre de couverture (1) est placée sur les espaceurs positionnés et les surfaces latérales de l'espace intermédiaire formé sont scellées par un produit de scellement latéral, ou
b2) le ruban de scellement (7) est collé tout autour de la partie supérieure du bord de la vitre (2) du vitrage feuilleté (5), de sorte que le ruban de scellement sert à la fois d'intercalaire et de scellant pour les surfaces latérales de l'espace intermédiaire, et la vitre de couverture (1) est collée sur le ruban de scellement collé, formant ainsi l'espace intermédiaire.

15. Utilisation d'un élément en verre praticable selon l'une des revendications 1 à 10 pour un vitrage praticable, par exemple pour un plancher en verre, une plate-forme, un ascenseur, un escalier ou un vitrage aérien praticable.
